# EUROPEAN PATENT APPLICATION

(11) **EP 4 485 053 A1**
(43) Date of publication of application: **01.01.2025**
(21) Application number: 23315256.0
(22) Date of filing: 26.06.2023
(51) Int. Cl.: G02C 7/10

(54) **OPHTHALMIC ARTICLE**

(71) Applicant: Essilor International, 94220 Charenton-Le-Pont (FR)
(72) Inventor: Berit-Debat, Fabien, 31320 Pechabou (FR); Giraudet, Guillaume, 45000 Orleans (FR); Biver, Claudine, 31320 Vigoulet Auzil (FR)
(74) Representative: Innovincia

(57) **Abstract**

The invention relates to [an ophthalmic article (1) in particular for gamer eyewear, comprising at least a first and a second electrochromic compound (7A, 7B), where the first electrochromic compound (7A) acts as a filter having a transmission rate of less than 20%, preferentially less than 10% in a range between 400nm and 500nm, preferentially 440-500nm and a transmission rate higher than 50%, preferentially higher than 60%, in a range between 580-620nm, preferentially between 580-610nm in one activated state and the second electrochromic compound (7B) acts as a filter having a transmission rate of higher than 20%, preferentially higher than 30%, in a range between 400nm and 500nm, preferentially 440-500nm and a transmission rate less than 20% preferentially less than 10% in a range between 580-620nm, preferentially between 580-610nm in one activated state.

## Description

### TECHNICAL FIELD

The present disclosure relates to an ophthalmic article.

The term "ophthalmic article" is specifically understood to mean a lens, corrective or otherwise, that can be used as spectacle glass, for spectacles for example, particularly sunglasses, goggles, visors or the like or a contact lens worn by the user in direct contact with his/her eyes.

### BACKGROUND OF THE DISCLOSURE

Playing action video games, whether it's "FPS" (**First-person shooter** (**FPS**) is a sub-genre of shooter video games centered on gun and other weapon-based combat in a first-person perspective, with the player experiencing the action through the eyes of an antagonist or protagonist which is armed, and then controlling the player character in a three-dimensional space.) or e-sports, requires particular attention and visual skills.

Indeed, players or gamers have to monitor carefully their whole screen and detect any potential threat in the action field as fast as possible, follow the global motion of targets and enemies while managing their own characters/troops and achieving the mission.

It has been shown that most of the visual skills involved in action video games are provided by the Magnocellular and dorsal visual stream. This visual stream conveys global spatial information and motion coming from the peripheral visual field. It's also considered as the "perception for action" visual system.

It has been shown that gamers wearing specifically tinted lenses can improve Magnocellular/dorsal processing and will have better performances than those without eyeglasses or wearing regular clear lenses.

Magnocellular cells, also called M-cells, are neurons located within the magnocellular layer of the lateral geniculate nucleus (LGN) of the thalamus. M-cells receive input from parasol or Y retinal ganglion cells.

The Magnocellular pathway is essential for detecting changes in luminance, and performing visual search tasks and detecting edges. Thanks to its strong sensitivity at high temporal frequencies, it can detect quick changes in objects positions. The Magnocellular pathway, connecting to MT brain area, is the motion detection/perception system. Beyond the extra-striate cortex, the M pathway sends information to dorsal brain areas such as the Intraparietal Sulcus (IPS) of the posterior parietal cortex. This visual dorsal stream is involved in directing attention and guide saccadic eye movements to follow important moving objects in the visual field. The Magnocellular/Dorsal stream is thus considered as the "perception for action" visual system.

Playing action video games requires fast detection of moving peripheral targets and good management of eye movements as well as attention distribution. This primarily involves the Magnocellular/Dorsal visual stream.

Hence, eyeglasses / eyewear with a special filter that selectively enhances the Magnocellular/Dorsal processing efficiency, may improve gamers' performances, which is a quite important aspect in particular for professional gamers.

However, such selective filters may have some side effects in terms of visual health on the one side and circadian rhythm on the other side.

Indeed, several studies showed that yellow filters improve Magnocellular/dorsal visual stream processing (see for example *"*Yellow Filters Can Improve Magnocellular Function: Motion Sensitivity, Convergence, Accommodation, and Reading", N.J. RAY, S. FOWLER, AND J.F. STEIN, Ann. N.Y. Acad. Sci. 1039: 283-293 (2005). doi: 10.1196/annals.1325.027). However, such yellow filters cannot be worn all day long. Indeed, removing blue light over a large part of the day may disrupt the internal circadian clock.

A new class of intrinsically photosensitive retinal ganglion cells (IPRGCs) has been recently discovered.

They contain melanopsin blue-sensitive pigment and, through their connections with the suprachiasmatic nucleus (SCN) in the hypothalamus, they are involved in the control of diurnal-nocturnal rhythms. So, there is a need for an alternative and/or complementary solution to improve long term gaming performances ("all-day-long") without adverse effects on sleep and mood.

Recent scientific work suggested that blue filters may facilitate Magnocellular/dorsal processing as well (*"*Dyslexia: the Role of Vision and Visual Attention", J.F. Stein, Curr. Dev. Disord. Rep. 1:267-280 (2014). DOI 10.1007/s40474-014-0030-6). Indeed, the SCN appears to activate the noradrenergic locus coeruleus and then specifically facilitate the magnocellular layers of the thalamic LGN and the dorsal visual pathway. Numerous studies also provided evidence that blue light improved alertness (for review, see "Diurnal spectral sensitivity of the acute alerting effects of light", S.A. Rahman et al., Sleep 37:271-281 (2014). doi: 10.5665/sleep.3396).

Hence, blue filters may be recommended as an alternative for intensive videogame players as well.

However, wearing blue filters all-day-long may have detrimental effects in particular regarding light-induced retina damages, in particular due to harmful blue light in the range of 430nm-435nm.

So there is a need for an eyewear that is capable to improve action videogame performances while preserving both circadian rhythms and visual health.

### SUMMARY OF THE DISCLOSURE

In order to achieve this goal, the present disclosure proposes an ophthalmic article in particular for gamer eyewear, comprising at least a first and a second electrochromic compound, where the first electrochromic compound acts as a filter having a transmission rate of less than 20%, preferentially less than 10% in a range between 400nm and 500nm, preferentially 440-500nm and a transmission rate higher than 50%, preferentially higher than 60%, in a range between 580-620nm, preferentially between 580-610nm in one activated state and the second electrochromic compound acts as a filter having a transmission rate of higher than 20%, preferentially higher than 30%, in a range between 400nm and 500nm, preferentially 440-500nm and a transmission rate less than 20% preferentially less than 10% in a range between 580-620nm, preferentially between 580-610nm in one activated state.

According to further aspects taken alone or in combination relating to the above defined ophthalmic article:
According to one aspect, in a deactivated state, at least one electrochromic compound shows a transmission rate higher than 80% between 480nm and 620nm.

The ophthalmic article may comprise a passive dye.

The invention also relates to an eyewear comprising at least an ophthalmic article as defined above, and comprising a control unit connected to the ophthalmic article and configured to activate only one of the first electrochromic compound or the second electrochromic compound at a time.

The control unit is for example configured to activate in alternating manner one of the first electrochromic compound or the second electrochromic compound.

The control unit can be configured to activate in alternating manner one of the first electrochromic compound or the second electrochromic compound after laps of a predefined duration.

The eyewear may further comprise an eye-tracker sensor and the control unit can be configured to switch between the activated states of the first and the second electrochromic compound upon reception of a signal of the eye-tracker sensor.

The signal of the eye-tracker sensor corresponds for example to a parameter corresponding to loss of attention or fatigue of a person using the eyewear.

The eyewear may comprise a switch and the control unit can be configured to switch between the activated states of the first and the second electrochromic compound upon reception of a signal of the switch.

The eyewear may further comprise a sensor configured to detect if the user of the eyewear is playing in front of a screen and the control unit is for example configured to switch off the activated states of the first and the second electrochromic compound upon reception of a signal of the gaming sensor when the gamer ends his game.

### BRIEF DESCRIPTION OF THE DRAWINGS

Other advantages and features will become apparent upon reading the description of the following figures, among which:
- figure 1 is a schematic view of simplified cross section of a first embodiment of an ophthalmic article according to the present disclosure,
- figure 2 is an example of a transmission spectrum of an electrochromic activated compound acting as yellow filter,
- figure 3 is an example of a transmission spectrum of an electrochromic activated compound acting as blue filter,
- figure 4 is a schematic view of a simplified cross section of a second embodiment of an ophthalmic article according to the present disclosure,
- figure 5 is a schematic view of a simplified cross section of a third embodiment of an ophthalmic article according to the present disclosure,
- figure 6 is an example of an eyewear according to a first embodiment,
- figure 7 is an example of an eyewear according to a second embodiment,
- figure 8 is an example of an eyewear according to a third embodiment,
- figure 9 is an example of an eyewear according to a fourth embodiment.

### DETAILED DESCRIPTION

On all the figures, the same elements bear the same reference numbers.

The following embodiments are only examples. Although the description refers to one or several embodiments, the invention is not limited to these embodiments. In addition, a feature described in relationship with one embodiment may also concern another embodiment even if this is not mentioned expressively. Simple features of different embodiments may also be combined to provide further realizations.

In the present description, by "front" or "rear" face of a layer or a lens element or surface, reference is made to the propagation of the rays of light towards the eye through the ophthalmic article or lens when an ophthalmic device bearing the ophthalmic lens is worn on a wearer's face. Thus a "front" face is always that which is farthest away to the eye of the user and therefore closest to the field of view and a "rear" face is always that which is closest to the eye of the user.

The terms "upstream" or "downstream" are used in relationship with the propagation light from outside the eye, through the lens element or ophthalmic article to be worn by the wearer, his pupil towards the retina of the wearer's eye. Thus, a first thing (a surface, a layer, an image etc) is located upstream of a second thing when the light passes through its path towards the retina of the wearer first through the first thing and then through the second thing.

For example, an image is located upstream or upfront the retina of the wearer's eye when the image is located in front of the retina between the pupil and the retina.

Conversely, a first thing is located "downstream" of a second thing when the light passes through its path towards the retina of the wearer first through the second element and then through the first element. Thus the retina of the wearer is located downstream of the lens element and the pupil of the wearer.

The disclosure relates to an ophthalmic article intended to be worn in front of an eye of a wearer.

In the context of the present disclosure, the term "ophthalmic article" can refer to a lens blank, an uncut optical lens, a spectacle optical lens edged to fit a specific spectacle frame, a vision mask or an ophthalmic lens.

The ophthalmic article according to the present disclosure may have an optical function adapted to the wearer.

In the sense of the present disclosure, an optical function corresponds to a function that may provide for a gaze direction the effect of an optical lens on the light ray passing through the optical lens.

The optical function may comprise a dioptric function, a light absorption, a light reflexion or a polarizing capability.

The dioptric function corresponds to the optical lens power, namely to the mean power, the astigmatism or the prismatic deviation, as a function of the gaze direction.

The ophthalmic article according to the present disclosure may have a specific optical design adapted to the wearer.

The wording "optical design" is a widely used wording known from the man skilled in the art in ophthalmic domain to designate the set of parameters allowing defining a dioptric function of an ophthalmic lens; each ophthalmic lens designer has its own designs, particularly for progressive ophthalmic lenses.

As for an example, a progressive ophthalmic lens "optical design" results of an optimization of a progressive surface so as to restore a presbyopia's ability to see clearly at all distances but also to optimally respect all physiological visual functions such as foveal vision, extra-foveal vision, binocular vision and to minimize unwanted astigmatisms.

For example, a progressive lens design comprises a power profile along the main gaze directions, also called meridian line, used by the lens wearer during day life activities, and distributions of powers, for instance mean power or astigmatism, on the sides of the lens, that is to say away from the main gaze directions.

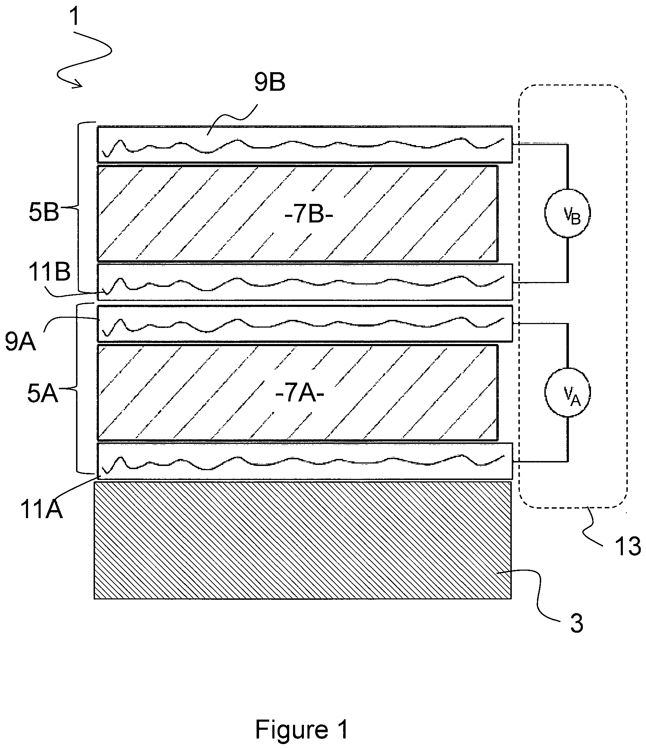

Figure 1 is a simplified cross section of a first embodiment of an ophthalmic article 1 according to the present disclosure.

The ophthalmic article 1 is schematically represented as a stack comprising a substrate 3 and a first 5A and a second 5B activable optical filter.

In this stack, first activable optical filter 5A is located downstream second activable optical filter 5B and the substrate 3 is located downstream second activable optical filter 5A. The first 5A and the second 5B activable optical filter may be inverted in position.

In figure 1, the dimensions of the filters 5A and 5B and the substrate 3 are not representative.

The substrate 3 is for example made of a plastic material, for instance a polymer substrate like a thermosetting material, in particular made of poly(urea-(thio)urethane) or made from resins like MR6^{®}, MR7^{®}, MR8^{®} and MR10^{®} or TRIVEX^{(C)} , (co)polymers of allyl carbonates, like CR39^{®}, or a thermoplastic plastic material, in particular made of polyamide (PA), like nylon or polycarbonates, polysulfones, (meth)acrylic (co)polymers like polymethyl methacrylate (PMMA), polyesters like Polyethylene terephtlate).

The activable optical filters 5A and 5B have the same surficial dimension (for example same diameter in case of circular dimension) as the substrate 3 and are superposed. Thus these activable optical filters 5A and 5B are expanding on the whole optical surface of the ophthalmic article 1.

As illustrated on FIG. 1, activable optical filters 5A and 5B comprise each one electrochromic device, for instance an electrochromic cell respectively 7A, 7B, arranged each between two transparent electrodes respectively 9A, 11A and 9B, 11B.

Electrochromic devices like activable optical filters 5A and 5B typically have a structure comprising two transparent outer layers, for example two sheets of organic or mineral glass, two electrically conductive layers, i.e. electrodes, deposited on the inner faces of the outer layers and connected to a power supply, an electrolyte placed between the two electrically conductive layers at the centre of said device and an electrochromic compound.

According to a not shown alternative, the two conductive layers, i.e. electrodes, may be realized as two interleaved electrodes located on the same outer or inner layer but at distance to each other to avoid any short circuit between them.

A further not shown alternative comprises the use of dichroic dyes embedded in a liquid crystal matrix. In this case, there is no electrolyte between the conductive layers but rather an alignment layer on each conductive layers to induce the alignment of the liquid crystal and the dichroic dye molecules.

The electrochromic compound is chosen so that it is coloured in the activated state and colourless or weakly coloured in the deactivated state.

With such electrochromic devices, it is possible to control state of electrochromic compounds in particular by applying a supply voltage, hence its light absorption.

Thus, the light transmission of the electrochromic device can be controlled with a supply voltage.

The wording "activated state" for electrochromic devices means that at least one electrochromic compound comprised in the electrochromic device is coloured, thus reducing light transmission through the electrochromic device.

The electrochromic device may comprise an electrochromic compound undergoing one optical property change upon application of an electrical field between the two transparent electrodes respectively 9A and 11A on the one side and 9B and 11B on the other side.

The electrochromic compound may be viologen and its derivates, yellow viologen or phenazine.

Other electrochromic compounds may comprise metal oxides (WO₃, V₂O₅, and NiO), metal complexes (like Prussian blue), and conducting polymers (polypyrrole, polythiophene, and polyaniline).

Typically, WO₃ has been widely investigated as a known inorganic electrochromic material due to its excellent stability, fast switching speed, high coloration contrast, and low energy consumption.

Viologen and its derivatives have a low driving voltage and a wide variety of colour variations, and low manufacturing cost.

Several electrochromic compounds may be used in combination.

Largely speaking, the electrochromic compound may be in the list consisting of compounds comprising one or several pyridinium rings, such as single viologen, two-core viologens, terpyridinium compounds, quaterpyridinium compounds, in particular compounds disclosed in European patent applications EP2848667, EP2848668 and EP3115433, or electrochromic compounds containing azole rings, like imidazole, benzimidazole, benzothiazole or benzoselenazole rings. It can also contain compounds like 5,10-dihydrophenazine , phenothiazine, phenoxazine, N,N,N',N'-tetramethyl-p-phenylenediamine, thioanthrene, tetrathiafulvalene, ferrocene and their derivatives.

Further examples of electrochromic compounds or filters comprise electrochromic polymers like polythiophene PEDOT or polyproDOT or derivatives, like PEDOT:PSS, or small electrochromic molecules grafted on electrode surfaces or on some nanoparticles with the advantage that they are bistable systems which do not need a permanent applied voltage to maintain their colour.

Liquid or gel electrochromic formulations with electrochromic compounds deposited on the electrodes either in the same device or in separate devices may also be considered.

Depending on the electric field applied, in other words voltage applied, the electrochromic compound may be activated.

In the embodiment shown in figure 1, the first activable optical filter 5A and the second activable optical filter 5B are two independent electrochromic devices.

Both filters 5A and 5B are connected to a control unit 13 which is configured to supply or not a voltage V_{A}, V_{B} to a respective filter 5A or 5B.

Control unit 13 comprises for example an accumulator like a battery, circuits, connections, conducting tracks, a memory, a timer, a processor (programmable or not) and switches (for example transistors).

Control unit 13 is configured in a way that only three states are possible:
- both filters 5A and 5B are off - incoming light is not or only slightly absorbed - clear state,
- filter 5A is activated and filter 5B is off/deactivated - transmission of incoming light is only altered / absorbed by activated filter 5A,
- filter 5B is activated and filter 5A is off/deactivated - transmission of incoming light is only altered / absorbed by activated filter 5B.

For the sake of the present disclosure each of the filters 5A and 5B comprises a different electrochromic compound.

For example, activable optical filter 5A is designed as a "yellow" electrochromic filter. In this case, electrochromic cell 7A comprises a first electrochromic compound having in an activated state a transmission rate of less than 20%, preferentially less than 10% in a range between 400nm and 500nm, preferentially 440-500nm and a transmission rate higher than 50%, preferentially higher than 60%, in a range between 580-620nm, preferentially between 580-610nm.

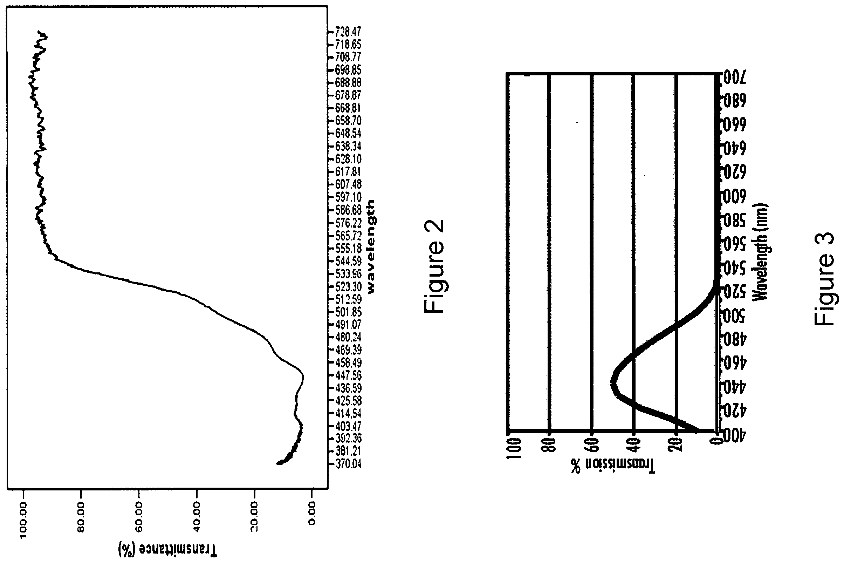

A typical example of a possible transmission spectrum for activable optical filter 5A in the activated state is shown in figure 2.

For example, activable optical filter 5B is designed as a "blue" electrochromic filter. In this case, electrochromic cell 7B comprises a second electrochromic compound (which is different from the first one) having in an activated state a transmission rate of higher than 20%, preferentially higher than 30%, in a range between 400nm and 500nm, preferentially 440-500nm and a transmission rate less than 20% preferentially less than 10% in a range between 580-620nm, preferentially between 580-610nm in one activated state.

A typical example of a possible transmission spectrum for activable optical filter 5B in the activated state is shown in figure 3.

In a deactivated state, at least one, possibly both electrochromic compounds and thus activable optical filters 5A / 5B show a transmission rate higher than 80% between 480nm and 620nm.

According to an alternative, the ophthalmic article 1 may comprise a passive dye, meaning a permanent dye. Such a dye is for example included in substrate 3.

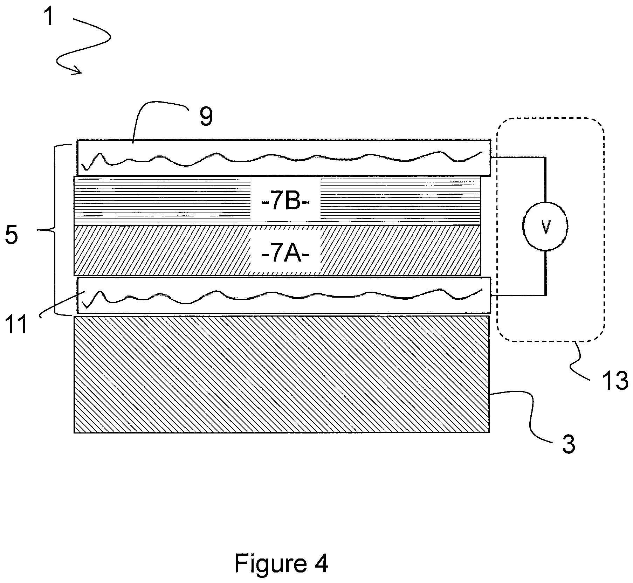

Figure 4 is a simplified cross section of a second embodiment of an ophthalmic article 1 according to the present disclosure.

The ophthalmic article 1 is schematically represented as a stack comprising a substrate 3 and an activable optical filter 5.

In this stack, the substrate 3 is located downstream activable optical filter 5.

In figure 4, the dimensions of the filter 5 and the substrate 3 are not representative.

The activable optical filter 5 has the same surficial dimension (for example same diameter in case of circular dimension) as the substrate 3 and is superposed to the substrate 3. Thus, the activable optical filter 5 is expanding on the whole optical surface of the ophthalmic article 1.

As illustrated on FIG. 4, activable optical filter 5 comprises a first 7A and a second 7B electrochromic cell arranged each between two transparent electrodes respectively 9 and 11.

For the sake of the present disclosure each of the first 7A and the second 7B electrochromic cell comprise a different electrochromic compound.

For example, the first electrochromic cell 7A is designed as a "yellow" electrochromic filter. In this case, electrochromic cell 7A comprises a first electrochromic compound having in an activated state a transmission rate of less than 20%, preferentially less than 10% in a range between 400nm and 500nm, preferentially 440-500nm and a transmission rate higher than 50%, preferentially higher than 60%, in a range between 580-620nm, preferentially between 580-610nm.

A typical example of a possible transmission spectrum in the activated state is shown in figure 2.

For example, the second electrochromic cell 7B is designed as a "blue" electrochromic filter. In this case, electrochromic cell 7B comprises a second electrochromic compound (which is different from the first one) having in an activated state a transmission rate of higher than 20%, preferentially higher than 30%, in a range between 400nm and 500nm, preferentially 440-500nm and a transmission rate less than 20% preferentially less than 10% in a range between 580-620nm, preferentially between 580-610nm in one activated state.

A typical example of a possible transmission spectrum in the activated state is shown in figure 3.

In a deactivated state, at least one electrochromic compound and thus electrochromic cell 7A or 7B shows a transmission rate higher than 80% between 480nm and 620nm.

Depending on the electric field applied, in other words voltage applied, the electrochromic compound may be activated.

In particular the first and second electrochromic compounds in cells 7A and 7B are designed to be deactivated when no voltage is applied and that they are activated at opposite voltages. For example, the first electrochromic compound in cell 7A is activated when a predetermined positive voltage is applied and the second electrochromic compound in cell 7B is activated when a predetermined negative voltage is applied. Thus, according to some configurations, switching between activation of the first and second electrochromic compounds in cells 7A and 7B may be achieved by simply inverting the sign of the supply voltage.

Like in figure 1, filter 5 is connected to a control unit 13 which is configured to supply a positive, a negative or zero voltage to a filter 5.

Control unit 13 comprises the same electric or electronic elements as already described above.

Control unit 13 is configured in way that only three states are possible:
- both electrochromic compounds 7A and 7B are deactivated when no voltage is applied - clear state,
- electrochromic compound 7A is activated when a positive voltage is applied and electrochromic compound 7B is deactivated - transmission of incoming light is only altered / absorbed by activated electrochromic compound 7A,
- electrochromic compound 7B is activated when a negative voltage is applied and electrochromic compound 7A is deactivated - transmission of incoming light is only altered / absorbed by activated electrochromic compound 7B.

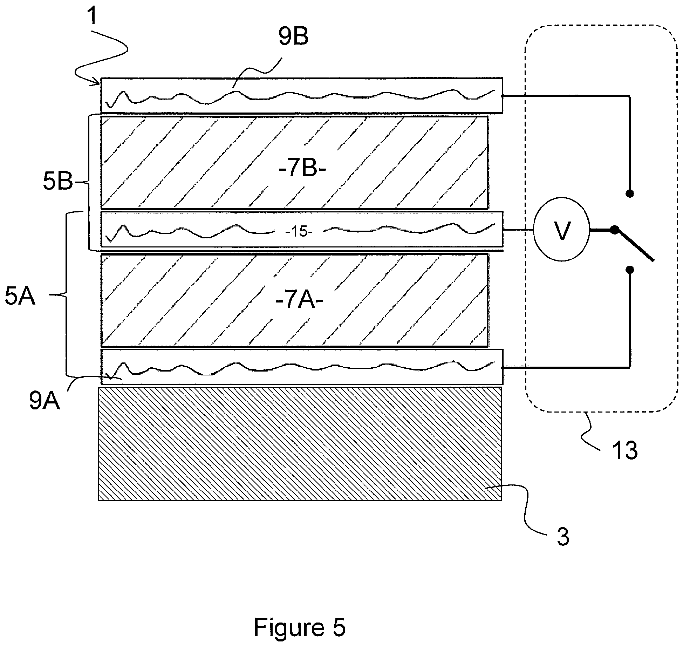

Figure 5 is a simplified cross section of a third embodiment of an ophthalmic article 1 according to the present disclosure.

The embodiment of figure 5 is quite similar to that of figure 1 and one difference is that electrodes 9A and 11B have been replaced by a common electrode 15. Thus in order to activate the electrochromic compound of cell 7A, a voltage is supplied to electrodes 9A and 15 and in order to activate the electrochromic compound of cell 7B, a voltage is supplied to electrodes 9B and 15. The control unit 13 is for example configured with a switch (physical switch or transistor) having a neutral position (zero voltage supply to the electrodes 9A, 15 and 9B), a first position for which a voltage is supplied to electrodes 9A and 15 in order to activate the electrochromic compound of cell 7A and a second position for which a voltage is supplied to electrodes 9B and 15 in order to activate the electrochromic compound of cell 7B.

Like for figure 1, control unit 13 is thus configured in way that only three states are possible:
- both electrochromic compounds 7A and 7B are deactivated - incoming light is not or only slightly absorbed - clear state,
- electrochromic compound in cell 7A is activated by application of a voltage between electrodes 9A and 15 and electrochromic compound 7B is deactivated - transmission of incoming light is only altered / absorbed by activated activate electrochromic compound 7A,
- electrochromic compound in cell 7B is activated by application of a voltage between electrodes 9B and 15 and electrochromic compound 7A is deactivated - transmission of incoming light is only altered / absorbed by activated activate electrochromic compound 7B.

According to the above described embodiments, when the wearer is gaming, either compound cell 7A is activated and acting for example as a yellow filter or compound cell 7B is activated and acting for example as a blue filter.

Both compound cells 7A and 7B have in common, when activated, to enhance the gamer's abilities to improve action videogame performances and to facilitate Magnocellular/dorsal processing.

By alternating activation of compound cell 7A acting as a yellow filter (preserving from light-induced retina damages) and compound cell 7B acting as a blue filter (allowing synchronisation of circadian rhythm) action videogame performances can be maximized while preserving both circadian rhythms and visual health, especially when the gamer is involved in a long duration game.

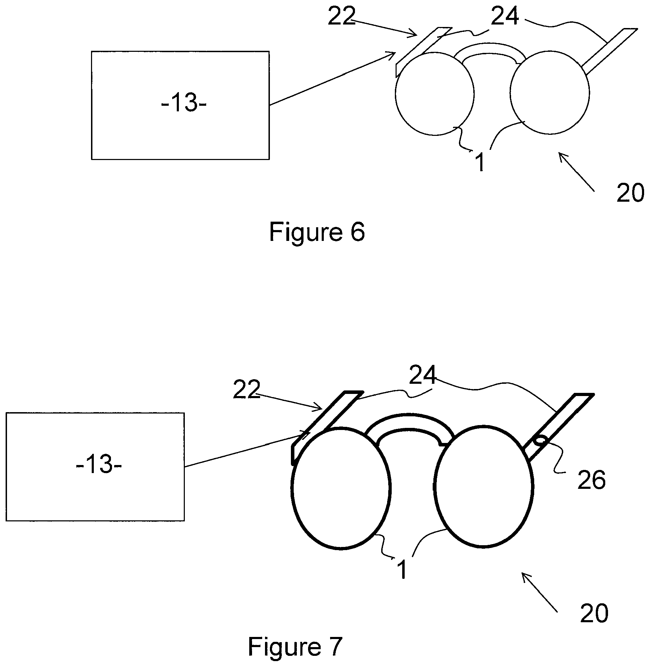

Figure 6 shows schematically an eyewear 20 like spectacles or googles with a frame 22 with its branches 24 and ophthalmic articles 1 as described above supported by the frame 22.

Also is shown schematically a control unit 13 which is for example integrated in one of the branches 24 of the eyewear 20.

The control unit 13 is for example wire connected through the frame to the ophthalmic articles 1 and in particular to the electrodes described above and configured to activate only one of the first electrochromic compound of cell 7A or the second electrochromic compound of cell 7B at a time as described above.

According to one possible embodiment, control unit 13 is configured to activate in alternating manner one of the first electrochromic compound of cell 7A or the second electrochromic compound of cell 7B.

For example, control unit 13 may comprise a timer and after laps of a predetermined duration, like for example 1 hour, (which may be chosen and configured by the wearer), the activated first/second electrochromic compound of cell 7A/B is deactivated and the deactivated second/first electrochromic compound of cell 7B/A is activated.

Figure 7 shows a further embodiment similar to that of figure 6 but with the difference the eyewear 20 further comprises a switch 26, like a push button or a capacitive sensor. In this case the control unit 13 is configured to switch between the activated states of the first and the second electrochromic compound of cells 7A /7B upon reception of a signal of the switch 26 when the wearer changes for example the state of the switch 26 with a fingertip.

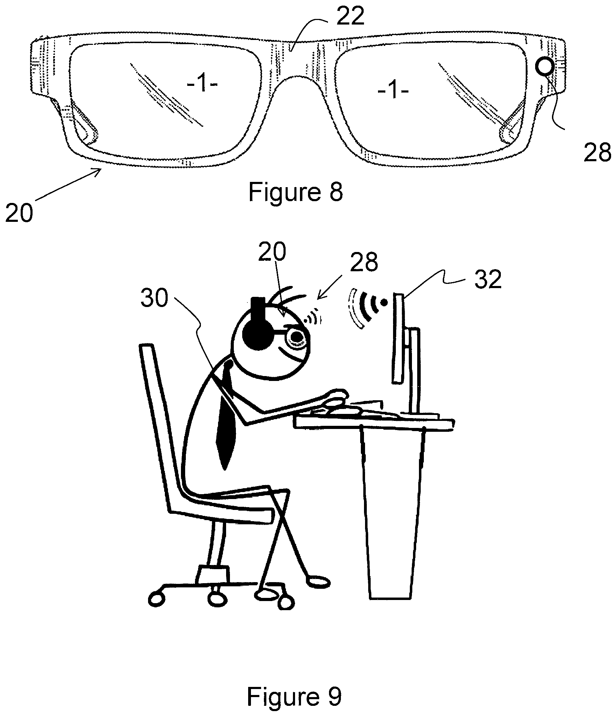

Figure 8 and 9 show another embodiment where the eyewear 20 further comprises a sensor 28, hereafter called "gaming sensor", for example integrated into the frame and configured to detect if the wearer 30 of the eyewear 20 is playing in front of a screen 32.

The gaming sensor 28 may be for example a Bluetooth^{©} device communicating with the gaming station as shown in figure 9 where the screen 32 is also equipped with a Bluetooth^{©} device.

In this case, the gaming station may send via Bluetooth a status signal that the wearer 30 of the eyewear 20 is playing in front of a screen 32. In this case the control unit 13 can start to activate alternating as explained above the first and the second electrochromic compound of the first and second cell 7A, 7B upon reception of the status signal.

Of course, other not shown embodiments may include a wired connection or IR connection between the gaming sensor 28 and the control unit 13.

Furthermore, the control unit 13 may be configured to switch off the activated states of the first and the second electrochromic compound 7A/7B upon reception of another status signal corresponding to "end of game" by the gaming sensor 28 when the gamer ends his game.

According to a further development, the gaming sensor 28 comprises a camera and the control unit 13 comprises an image processor configured to detect if the wearer 30 of the eyewear 20 is playing in front of a screen 32 or not. If this is the case, the control unit 13 switches on the activated states of the first and the second electrochromic compound 7A/7B in an alternating manner as described above.

According to non-illustrated embodiment, the eyewear 20 comprises an eye-tracker sensor and the control unit 13 is configured to switch between the activated states of the first and the second electrochromic compound of the cells 7A, 7B upon reception of a signal of the eye-tracker sensor.

In particular, the signal of the eye-tracker sensor may correspond to a parameter corresponding to loss of attention or fatigue of the wearer using the eyewear 20. Such a parameter may be in particular the speed of the saccades, as they are good indicators of fatigue.

The eyetracker may also be integrated as a camera on a screen 32 as shown in figure 9 and an eye-tracker fatigue signal may be transmitted wireless, for example via Bluetooth^{©} to the control unit 13 as already explained above and causes alternation of the activated electrochromic compound.

Thus, by activating in alternating manner either compound cell 7A acting for example as a yellow filter or compound cell 7B acting for example as a blue filter during gaming, the gamer's abilities with regard to action videogame performances and Magnocellular/dorsal processing are improved while preserving both circadian rhythms and visual health. To this extent, a regular clock time can be used and an individual chronotype parameter can be for example obtained with relevant questionnaires to customize the tint change moment according to this chronotype parameter.

The invention has been described above with the aid of embodiments without limitation of the general inventive concept. Moreover, the embodiments of the invention may be combined without any restriction.

Many further modifications and variations will suggest themselves to those skilled in the art upon making reference to the foregoing illustrative embodiments, which are given by way of example only and which are not intended to limit the scope of the invention, that being determined solely by the appended claims.

One further aspect concerns the time modulation of the tint switch / control unit. Indeed, any intrusion into the game and attract the gamer's attention to something else than his/her game should be avoided as much as possible.

In order to achieve this goal, one may consider change the tint over a period of time of several seconds.

Thus, there may be two different switching durations: a very short one (over a couple of hundred milliseconds) when the switch is manually controlled and a longer one (over several seconds, 3-4 seconds for instance) when it's done automatically, following a default mode or a customized mode when the chronotype and the clock time information are considered.

In the claims, the word "comprising" does not exclude other elements or steps, and the indefinite article "a" or "an" does not exclude a plurality. The mere fact that different features are recited in mutually different dependent claims does not indicate that a combination of these features cannot be advantageously used. Any reference signs in the claims should not be construed as limiting the scope of the invention.

## Claims

1. An ophthalmic article (1) in particular for gamer eyewear (20), comprising at least a first and a second electrochromic compound (7A, 7B), where the first electrochromic compound (7A) acts as a filter having a transmission rate of less than 20%, preferentially less than 10% in a range between 400nm and 500nm, preferentially 440-500nm and a transmission rate higher than 50%, preferentially higher than 60%, in a range between 580-620nm, preferentially between 580-610nm in one activated state and the second electrochromic compound (7B) acts as a filter having a transmission rate of higher than 20%, preferentially higher than 30%, in a range between 400nm and 500nm, preferentially 440-500nm and a transmission rate less than 20% preferentially less than 10% in a range between 580-620nm, preferentially between 580-610nm in one activated state.

2. The ophthalmic article (1) as claimed in claim 1, where in a deactivated state, at least one electrochromic compound (7A, 7B) shows a transmission rate higher than 80% between 480nm and 620nm.

3. The ophthalmic article (1) as claimed in claim 1 or 2, comprising a passive dye.

4. Eyewear (20) comprising at least an ophthalmic article (1) according to any of claims 1 to 3, and comprising a control unit (13) connected to the ophthalmic article (1) and configured to activate only one of the first electrochromic compound (7A) or the second electrochromic compound (7B) at a time.

5. Eyewear (20) according to claim 4, where the control unit (13) is configured to activate in alternating manner one of the first electrochromic compound (7A) or the second electrochromic compound (7B).

6. Eyewear according to claim 5, where the control unit (13) is configured to activate in alternating manner one of the first electrochromic compound (7A) or the second electrochromic compound (7B) after laps of a predefined duration.

7. Eyewear according to claim 4, further comprising an eyetracker sensor and where the control unit (13) is configured to switch between the activated states of the first and the second electrochromic compound (7A, 7B) upon reception of a signal of the eye-tracker sensor.

8. Eyewear according to claim 7, where the signal of the eyetracker sensor corresponds to a parameter corresponding to loss of attention or fatigue of a person using the eyewear (20).

9. Eyewear according to claim 4, further comprising a switch (26) and where the control unit (13) is configured to switch between the activated states of the first and the second electrochromic compound upon reception of a signal of the switch (26).

10. Eyewear (20) according to any of claims 4 to 9, further comprising a sensor (28) configured to detect if the user of the eyewear (20) is playing in front of a screen (32) and where the control unit (13) is configured to switch off the activated states of the first and the second electrochromic compound (7A, 7B) upon reception of a signal of the gaming sensor when the gamer ends his game.
